# EUROPÄISCHE PATENTSCHRIFT

(11) **EP 3 294 784 B1**
(45) Veröffentlichungstag und Bekanntmachung des Hinweises auf die Patenterteilung: **23.03.2022**
(21) Anmeldenummer: 16723317.0
(22) Anmeldetag: 10.05.2016
(51) Int. Cl.: C08F 236/06, B29B 7/74, B29D 30/06, B60C 1/00

(54) **VERFAHREN ZUR HERSTELLUNG EINES COPOLYMERS, COPOLYMER UND KAUTSCHUKMISCHUNG SOWIE DEREN VERWENDUNG**
METHOD FOR THE SYNTHESIS OF A COPOLYMER, COPOLYMER, RUBBER MIXTURE, AND USE THEREOF
PROCÉDÉ DE PRÉPARATION D'UN COPOLYMÈRE, COPOLYMÈRE ET MÉLANGE DE CAOUTCHOUC AINSI QUE SON UTILISATION

(30) Priorität: 12.05.2015 DE 102015208814
(43) Veröffentlichungstag der Anmeldung: 21.03.2018
(73) Patentinhaber: Continental Reifen Deutschland GmbH, 30165 Hannover (DE)
(72) Erfinder: HERZOG, Katharina, 31177 Harsum (DE); MÜLLER, Lena, 31714 Lauenhagen (DE); RECKER, Carla, 30167 Hannover (DE); PRUSS, Noa, 60598 Frankfurt (DE); CONRAD, Cathrin Sonja, 34346 Hannoversch Münden (DE); VANA, Phillipp, 37581 Bad Gandersheim (DE)
(74) Vertreter: Continental Corporation
(86) Internationale Anmeldenummer: PCT/EP2016/060381
(87) Internationale Veröffentlichungsnummer: WO 2016/180803

(56) Entgegenhaltungen:
- EP-A1- 0 034 020
- JP-A- 2006 199 827
- US-A- 2 947 731
- US-A- 4 483 960
- DANIEL GONZÁLEZ-FERNÁNDEZ ET AL: "Copolymers with acetyl-protected thiol pendant groups as highly efficient stabilizing agents for gold surfaces", RSC ADVANCES: AN INTERNATIONAL JOURNAL TO FURTHER THE CHEMICAL SCIENCES, Bd. 5, Nr. 18, 1. Januar 2015 (2015-01-01) , Seiten 13722-13726, XP055287489, GB ISSN: 2046-2069, DOI: 10.1039/C4RA12458H
- DATABASE WPI Week 200659 Thomson Scientific, London, GB; AN 2006-572085 XP002759736, & JP 2006 199827 A (FUJI PHOTO FILM CO LTD) 3. August 2006 (2006-08-03)
- Conrad Cathrin Sonja: "Polybutadien und Butadien enthaltende Copolymere mit gezielt eingebauten vulkanisierbaren Gruppen durch RAFT-Polymerisation", , 1 January 2013 (2013-01-01), XP055808362, Retrieved from the Internet: URL:https://ediss.uni-goettingen.de/bitstr eam/handle/11858/00-1735-0000-0022-5E9E-D/ Diss_Conrad.pdf?sequence=1 [retrieved on 2021-05-27]

## Beschreibung

Die Erfindung betrifft ein Verfahren zur Herstellung eines Copolymers, ein Copolymer, welches durch das Verfahren hergestellt ist, eine schwefelvernetzbare Kautschukmischung sowie die Verwendung der schwefelvernetzbaren Kautschukmischung zur Herstellung von Fahrzeugreifen, Gurten, Riemen und Schläuchen.

Copolymere wie z.B. Styrol-Butadien-Kautschuk werden in schwefelvernetzbaren Kautschukmischungen verwendet um Eigenschaften wie das Abriebverhalten und/oder der Reißeigenschaften und/oder das Rollwiderstandsverhalten zu beeinflussen. Allerdings unterliegt die Struktur der Netzknotenbildung bei der Schwefelvulkanisation weitestgehend dem Zufall. Hierdurch können die genannten Eigenschaften nicht beliebig gezielt beeinflusst und verbessert werden. EP0034020 und US4483960 offenbaren ein Verfahren zur Herstellung eines Copolymers durch radikalische Copolymerisation von Natriumstyrolsulfonat mit Butadien.

Der Erfindung liegt die Aufgabe zu Grunde, ein Verfahren zur Herstellung eines Copolymers bereitzustellen, sodass mit den hergestellten Copolymeren in einer vulkanisierten Kautschukmischung eine Verbesserung des Abriebverhaltens und/oder der Reißeigenschaften und/oder des Rollwiderstandsverhaltens erzielt wird.

Gelöst wird diese Aufgabe erfindungsgemäß durch Verfahren zur Herstellung eines Copolymers durch radikalische Copolymerisation eines Monomers gemäß Formel I) mit wenigstens einem Dien

I) A-S-P,

wobei A eine chemische Gruppe enthaltend wenigstens eine aliphatische Doppelbindung ist, und
wobei S ein Schwefelatom ist, und
wobei P eine Schutzgruppe ist, die ausgewählt ist aus der Gruppe bestehend aus S(=O)₂-R¹ mit R¹ = Alkyl, Benzyl oder Phenyl und/oder
S-C(=S)-N-R²R³ mit R² und R³ = Alkyl, Benzyl oder Phenyl und/oder
C(=O)-R⁴ mit R⁴ = Alkyl und/oder
N-R⁵R⁶ mit R⁵ = Wasserstoffatom (H), Alkyl, Benzyl oder Phenyl und
R⁶ = Alkyl, Benzyl oder Phenyl und/oder
SiR⁷R⁸R⁹ mit R⁷, R⁸ und R⁹ = Alkyl oder Benzyl und/oder
S(=O)₂-OM mit M = Na, K oder H.

Erfindungsgemäß wird bei dem Verfahren somit wenigstens ein Monomer verwendet, welches a) wenigstens eine Doppelbindung, die an einer Polymerisation teilnehmen kann, und b) eine geschützte Mercaptogruppe aufweist, die später bei der Vulkanisation der damit hergestellten Copolymere entschützt wird, sodass das Schwefelatom dieser Mercaptogruppe an der Vulkanisation teilnehmen kann. Hierdurch kann die Netzknotenstruktur der mit dem Copolymer hergestellten Schwefelvulkanisate im Vergleich zum Stand der Technik besser eingestellt werden, was sich positiv auf das Abriebverhalten und/oder der Reißeigenschaften und/oder das Rollwiderstandsverhalten der Kautschukmischung auswirkt.

Bei dem erfindungsgemäßen Verfahren zur Herstellung eines Copolymers können alle üblichen radikalischen Verfahren Anwendung finden, insbesondere in Lösung, in Emulsion und unter RAFT-Bedingungen mit RAFT-üblichen Agenzien.

Die in Formel I) genannten Reste R¹ bis R⁹ der Schutzgruppe P können wie oben aufgeführt Alkylgruppen sein. Hierbei sind 1 bis 10 Kohlenstoffatome bevorzugt. Zudem ist O = Sauerstoffatom, N = Stickstoffatom, Na = Natrium, wobei es in Form von Na⁺ vorliegt, K = Kalium, wobei es in Form von K⁺ vorliegt.

Die Gruppe A ist eine chemische Gruppe enthaltend wenigstens eine aliphatische Doppelbindung, bevorzugt wenigstens eine endständige Doppelbindung, d.h. vinylische Doppelbindung. Hierbei sind prinzipiell alle chemischen Gruppen denkbar, die wenigstens das Merkmal der aliphatischen, bevorzugt endständigen vinylischen, C=C-Doppelbindung aufweisen. Eine derartige Doppelbindung ist geeignet an einer Polymerisation teilzunehmen, womit die Verbindung gemäß Formel I) ein geeignetes Monomer eines späteren Copolymers darstellt.

Unter "Doppelbindung" ist im Rahmen der vorliegenden Erfindung eine Kohlenstoff-Kohlenstoff-Doppelbindung, also C=C, zu verstehen, sofern nicht ausdrücklich anders bezeichnet.

Besonders bevorzugt ist A eine 4-Vinylbenzyl-Gruppe.

Die Schutzgruppe P ist besonders bevorzugt ausgewählt ist aus der Gruppe bestehend aus S(=O)₂-R¹ mit R¹ = Alkyl, Benzyl oder Phenyl und/oder S-C(=S)-N-R²R³ mit R² und R³ = Alkyl, Benzyl oder Phenyl und/oder C(=O)-R⁴ mit R⁴ = Alkyl und/oder N-R⁵R⁶ mit R⁵ = Wasserstoffatom (H), Alkyl, Benzyl oder Phenyl und R⁶ = Alkyl, Benzyl oder Phenyl.

Gemäß einer besonders bevorzugten Ausführungsform der Erfindung handelt es sich bei dem Monomer um 4-Vinylbenzylthioacetat, wobei A eine 4-Vinylbenzyl-Gruppe und P eine C(=O)-CH₃-Gruppe ist.

Diese Verbindung weist somit die Formel II) auf

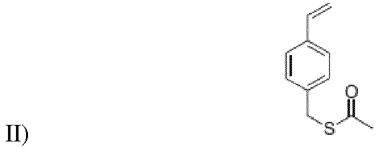

Das Monomer gemäß Formel II), also 4-Vinylbenzylthioacetat (abgekürzt ViBET) wird mit folgendem erfindungsgemäßen Verfahren hergestellt:

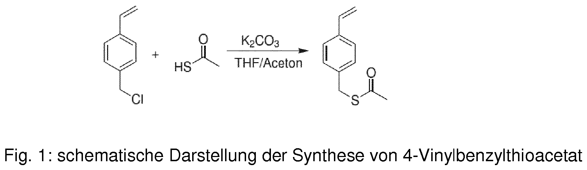

Die Synthese von ViBET erfolgt in polar-aprotischen Lösungsmitteln, wobei das polar-aprotische Lösungsmittel ausgewählt ist aus Ketonen wie Aceton, Nitrilen wie Acetonitril, Nitroverbindungen wie Nitromethan, tertiären Carbonsäureamiden wie Dimethylformamid, Hexamethylphosphorsäuretriamid, Sulfoxide wie Dimethylsulfoxid, Sulfonen wie Tetrahydrothiophen-1,1 -dioxid, . Diethem des Ethylenglycols, Kohlensäureestern wie Dimethylcarbonat oder Ethylen-und Propylencarbonat, Harnstoffderivaten wie Tetramethylharnstoff oder Dimethylpropylenharnstoff, Lactamen wie N-Methyl-2-pyrrolidon und Lactonen wie Y-Butyrolacton, bevorzugt THF und/oder Aceton, aus 4-Vinylbenzylchlorid und Thioessigsäure unter Zuhilfenahme Kaliumcarbonat, wie in Fig. 1 gezeigt. Hierbei steht THF für Tetrahydrofuran.

Die Synthese ist auch für den Technikumsmaßstab geeignet, da sich das Edukt quantitativ umsetzt und keine weitere Aufreinigung erforderlich ist.

Die in der US 2947731 offenbarte Synthese erfolgt in kurzkettigen aliphatischen

Alkoholen wie Methanol mit einem Thiosäuresalz (hergestellt *in situ* aus Thioessigsäure und einem Alkalimetallhydroxid), welches mit 4-Vinylbenzylchlorid zu dem gewünschten Produkt reagiert, das aber destillativ aufgereinigt werden muss.

Polar aprotische Lösungsmittel haben eine hohe Dielektrizitätskonstante bzw. dielektrische Leitfähigkeit ε (oder auch Permittivität genannt), besitzen jedoch keine ausreichend aciden Wasserstoffatome, die als Protonen abgespalten werden können. Daher können Anionen nicht durch Wasserstoffbrückenbindungen, sondern nur durch die wesentlich schwächeren Dispersionskräfte solvatisiert werden. In diese Gruppe nukleophiler Lösungsmittel gehören: Ketone wie Aceton (ε = 20), Nitrile wie Acetonitril (ACN, ε = 37), Nitroverbindungen wie Nitromethan (ε = 37), tertiäre Carbonsäureamide wie Dimethylformamid (DMF, ε = 37), Hexamethylphosphorsäuretriamid (ε = 30), Sulfoxide wie Dimethylsulfoxid (DMSO, ε = 47), Sulfone wie Tetrahydrothiophen-1,1-dioxid (Sulfolan, ε = 44) Diether des Ethylenglycols, Kohlensäureester wie Dimethylcarbonat oder Ethylen- und Propylencarbonat (ε = 65), Harnstoffderivate wie Tetramethylharnstoff der Dimethylpropylenharnstoff (DMPU), Lactame wie N-Methyl-2-pyrrolidon, Lactone wie Υ-Butyrolacton u.a.

Bevorzugt sind Dimethoxyethan (DME), Tetrahydrofuran (THF), Diethylether (DEE), Aceton, Dioxan, Dimethylsulfoxid (DMSO), Dimethylformamid (DMF), Acetonitril (ACN).

Besonders bevorzugt sind Aceton, Tetrahydrofuran (THF), Dioxan, Diethylether (DEE), 1,2-Dimethoxyethan (DME), ganz besonders bevorzugt THF und/oder Aceton.

### Beispiel 1 der Synthese von ViBET:

4-Vinylbenzylchlorid (6,63 g, 43,5 mmol, 1,0 Äq.), Thioessigsäure (3,97 g, 3,75 mL, 52,2 mmol, 1,2 Äq.) und Kaliumcarbonat (6,01 g, 52,2 mmol, 1,2 Äq.) wurden in THF (80 mL) für 19 h bei Raumtemperatur gerührt. Anschließend wurde die Reaktionsmischung im Vakuum eingeengt, der Rückstand in demineralisiertem Wasser (100 mL) gelöst und mit EtOAc (3 x 70 mL) extrahiert. Die vereinigten organischen Phasen wurden mit gesättigter NaCl-Lösung gewaschen, über MgSO₄ getrocknet und das Lösungsmittel im Vakuum entfernt. Das Produkt wurde in Form einer orangen Flüssigkeit (8,20 g, 42,6 mmol, 98 %) erhalten.

### Beispiel 2 der Synthese von ViBET:

Thioessigsäure (1,71 g, 1,62 mL, 22,5 mmol, 1,5 Äq.) und Kaliumcarbonat (2,49 g, 22,5 mmol, 1,5 Äq.) wurde in Aceton (60 mL) vorgelegt und 30 min bei Raumtemperatur gerührt. 4-Vinylbenzylchlorid (2,83 g, 2,11 mL, 15,0 mmol, 1,0 Äq.) wurde langsam zugetropft und die Reaktionsmischung für 30 min bei 40 °C gerührt. Das Lösungsmittel wurde im Vakuum entfernt, der Rückstand in demineralisiertem Wasser (50 mL) gelöst und mit EtOAc (3 x 30 mL) extrahiert. Die vereinigten organischen Phasen wurden mit gesättigter NaCl-Lösung gewaschen, über MgSO₄ getrocknet und das Lösungsmittel im Vakuum entfernt. Das Produkt wurde in Form einer orangen Flüssigkeit (2,88 g, 15,0 mmol, quantitativ) erhalten.

Im Rahmen der vorliegenden Erfindung werden unter Dienen gemäß Römpp Online ungesättigte aliphatische und cycloaliphatische Kohlenwasserstoffe, die im Molekül zwei Doppelbindungen enthalten, verstanden. Bevorzugt sind die beiden Doppelbindungen konjugiert. Bevorzugt ist das konjugierte Dien ausgewählt aus der Gruppe enthaltend 1,3-Butadien (Butadien) und/oder 2-Methylbuta-1,3-dien (Isopren = 2-(C₁-C₅-Alkyl)-1,3-Butadien) und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien und/oder 2-Chlor-1,3-butadien (Chloropren).

Besonders bevorzugte Diene sind hierbei Isopren, Butadien und Chloropren.

Besonders bevorzugt ist das konjugierte Dien ausgewählt aus der Gruppe bestehend aus 1,3-Butadien (Butadien) und/oder 2-Methylbuta-1,3-dien (Isopren = 2-(C₁-C₅-Alkyl)-1,3-Butadien) und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien und/oder 2-Chlor-1,3-butadien (Chloropren).

Besonders bevorzugte Diene sind hierbei Isopren, Butadien und Chloropren.

Weiterhin können Monomere wie insbesondere Alkene, Vinyl-Verbindungen und/oder Vinyliden-Verbindungen an dem erfindungsgemäßen Verfahren beteiligt sein, womit sich als Copolymere Terpolymere oder Polymere mit mehr als drei verschiedenen Monomeren ergeben.

Alkene, die als Monomere an der Polymerisation beteiligt sein können, sind aliphatische Verbindungen mit einer Doppelbindung, wie insbesondere Ethen, Propen, Buten, Penten, Hexen.

Der Begriff "Vinyl-Verbindung" umfasst im Rahmen der vorliegenden Erfindung alle chemischen Verbindungen, die wenigstens eine Vinyl-Gruppe aufweisen, wie Acrylate, Methacrylate, Acrylsäure, Methacrylsäure, Acrylnitril, sowie vinylaromatische Verbindungen.

Gemäß einer bevorzugten Ausführungsform der Erfindung handelt es sich bei der Vinyl-Verbindung zumindest um wenigstens eine Vinyl-Verbindung, die außer der Vinyl-Gruppe wenigstens eine weitere ungesättigte Gruppe Kohlenstoffgruppe aufweist, wie insbesondere eine Doppelbindung oder einen aromatischen Rest.

Gemäß einer besonders bevorzugten Ausführungsform der Erfindung handelt es sich bei der Vinyl-Verbindung zumindest um wenigstens eine vinylaromatische Verbindung.

Der Begriff "vinylaromatische Verbindung" umfasst im Rahmen der vorliegenden Erfindung monovinylaromatische Verbindungen, d.h. Verbindungen, bei denen nur eine

Vinylgruppe an eine aromatische Gruppe gebunden ist, sowie vinylaromatische Verbindungen, bei denen zwei oder mehr Vinylgruppen an eine aromatische Gruppe gebunden sind.

Als vinylaromatische Verbindung ist jede dem Fachmann bekannte denkbar. Bevorzugt ist die vinylaromatische Verbindung ausgewählt aus der Gruppe enthaltend, besonders bevorzugt bestehend aus, Styrol und/oder C₁₋₄-Alkylsubstituierte Styrole und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder divinylaromatische Verbindungen.

Bei den C₁₋₄-Alkylsubstituierten Styrolen kann es sich beispielsweise um 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol handeln.

Der Begriff "C₁₋₄-Alkylsubstituiert" bedeutet hierbei, dass ein Alkyl-Rest mit 1 bis 4 Kohlenstoffatomen als Substituent eines Wasserstoffatoms vorhanden ist.

Bei den divinylaromatische Verbindungen kann es sich beispielsweise um 1,2-Divinylbenzol und/oder 1,3-Divinylbenzol und/oder 1,4-Divinylbenzol handeln.

Unter Vinyliden-Verbindungen werden im Rahmen der vorliegenden Erfindung gemäß Römpp Online chemische Verbindungen verstanden, die die über eine Doppelbindung verknüpfte Atomgruppierung R₁R₂=C=CH₂ aufweisen, wie beispielsweise Cl₂C=CH₂ oder F₂C=CH₂.

Das Verfahren zur Herstellung eines Copolymers durch radikalische Copolymerisation des Monomers mit einem Dien ist im Folgenden anhand des Beispiels der Copolymerisation von Verbindung II), also 4-Vinylbenzylthioacetat (ViBET), mit Butadien beschrieben. Das Verfahren ist nicht auf die genannten beispielhaften Monomere beschränkt, sondern kann erfindungsgemäß zur Herstellung aller Copolymere aus den oben beschriebenen Monomeren verwendet werden, inkl. zur Herstellung von Copolymeren aus drei oder mehr verschiedenen Monomeren.

Die Polymerisation erfolgte bei 60 °C in Toluol und zwar mit folgenden Mol-% der eingesetzten Substanzen:

### Beispiel 3

36, 792 Mol.-% Butadien zu 0,639 Mol.-% ViBET zu 0,01 Mol.-% AIBN zu 62,559 Mol.-% Toluol.

### Beispiel 4

29,137 Mol.-% Butadien zu 0,318 Mol.-% ViBET zu 0,003 Mol.-% AIBN zu 62,559 Mol.-% Toluol.

Hierbei ist AIBN die Abkürzung der chemischen Verbindung Azobis(isobutyronitril).

Die Polymerisation in Beispiel 3 ging über 48 Stunden, wonach ein Copolymer aus Butadien und ViBET mit einem Zahlenmittel der Molmasse (bzw. der Molmassenverteilung) Mn gemäß GPC von 5052 g/mol erhalten wurde.

Um den Einbau von ViBET in das Copolymer verifizieren zu können, wurde die UV-Absorption der Probe bei einer Wellenlänge von 295 nm mittels GPC bestimmt. Bei dieser Wellenlänge absorbiert reines Polybutadien nicht, aber der Thioester. Da zusätzlich zu dem RI-Detektor auch der UV-Detektor Polymer detektiert, wurde das gewünschte Copolymer erfolgreich synthetisiert.

Bei der Polymerisation in Beispiel 4 wurde die Zunahme des Mn des hergestellten Copolymers mit zunehmender Reaktionszeit verfolgt.

Nach 24 Stunden betrug das Mn 5323 g/mol;

Nach 48 Stunden betrug das Mn 6265 g/mol.

Für die Bestimmung der Molmasse bzw. der Molmassenverteilung mittels GPC gelten im Rahmen der vorliegenden Erfindung folgende Messbedingungen: SEC Analysis Systems 1260 Infinity von PSS Agilent mit: PSS Agilent Technologies 1260 Iso Pump G1310B (HPLC-Pumpe), einem Agilent 1260 ALS G1329B Autosampler, einem Agilent 1260 ALS Injektor, einer Vorsäule (PSS SDV, 8 × 50 mm, Partikelgröße 5 µm), drei Trennsäulen (PSS SDV, 8 x 300 mm, Partikelgröße: 5 µm, Porengröße 10⁵ (zehn hoch fünf) Ä, 10³ (zehn hoch drei) Å und 10² (zehn hoch zwei) Å) und den Detektoren; UV-Detektor PSS Agilent Technologies 1260 VWDVL bei einer Wellenlänge von 310 nm sowie der RI-Detektor PSS Agilent Technologies 1260 RID benutzt; Laufmittel THF (HPLC-grade) mit Toluol (> 99,7 %, trocken) als interner Standard (Fließgeschwindigkeit 1,0 mL/min bei 35 °C). Das System wird mit Polystyrol-Standards mit niedriger Polydispersität von PSS kalibriert. Zur Auswertung wird die Software PSS WinGPC verwendet. Die detektierten Intensitäten werden auf 1 normiert und, sofern nicht anders angegeben, das Signal des RI-Detektors dargestellt.

Ein weiterer Gegenstand der vorliegenden Erfindung besteht in einem Copolymer, welches durch das Verfahren hergestellt ist. Beispielweise handelt es sich um ein Copolymer aus Butadien und 4-Vinylbenzylthioacetat, welches wie oben beschrieben unter Bedingungen der radikalischen Polymerisation hergestellt wurde.

Bevorzugte Comonomere (neben den Verbindungen I) oder II)) sind oben bereits genannt, wobei erfindungsgemäß wenigstens eines davon ein Dien ist.

Bei dem erfindungsgemäßen Copolymer kann es sich auch um ein Polymer aus drei oder mehr verschiedenen Monomeren handeln. Somit kann das erfindungsgemäße Copolymer bspw. ein Terpolymer aus 4-Vinylbenzylthioacetat, Styrol und Butadien sein.

Weiterhin können zwei oder mehr verschiedene Monomere gemäß Formel I) verwendet werden, die z.B. unterschiedliche Schutzgruppen P aufweisen.

Ein weiterer Gegenstand der vorliegenden Erfindung besteht in einer schwefelvernetzbaren Kautschukmischung, die wenigstens eines der hergestellten Copolymere enthält.

Die erfindungsgemäße schwefelvernetzbare Kautschukmischung enthält wenigstens eines der hergestellten Copolymere und kann zudem zusätzlich wenigstens einen im Stand der Technik bekannten Dienkautschuk enthalten.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei dem wenigstens einen Dienkautschuk handelt es sich um natürliches Polyisopren und/oder synthetisches Polyisopren und/oder Polybutadien (Butadien-Kautschuk) und/oder unfunktionalisiertes Styrol-Butadien-Copolymer (Styrol-Butadien-Kautschuk) und/oder epoxidiertes Polyisopren und/oder Styrol-Isopren-Kautschuk und/oder HalobutylKautschuk und/oder Polynorbornen und/oder Isopren-Isobutylen-Copolymer und/oder Ethylen-Propylen-Dien-Kautschuk und/oder Nitril-Kautschuk und/oder ChloroprenKautschuk und/oder Acrylat-Kautschuk und/oder Fluor-Kautschuk und/oder SilikonKautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Die Begriffe "vulkanisiert" und "vernetzt" werden im Rahmen der vorliegenden Erfindung synonym verwendet.

Die erfindungsgemäße Kautschukmischung enthält ferner bevorzugt wenigstens einen Füllstoff wie Kieselsäure, Ruß sowie ggf. weitere bekannte polare und/oder unpolare Füllstoffe, wie Alumosilicate, Kreide, Kaolin, Stärke, Magnesiumoxid, Titandioxid und/oder Kautschukgele, sowie Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und CarbonylGruppen) und/oder Graphit und/oder Graphene und/oder sogenannte "carbon-silica dualphase filler".

Handelt es sich bei dem Füllstoff um wenigstens eine Kieselsäure, so enthält die Kautschukmischung bevorzugt 1 bis 300 phr, besonders bevorzugt 1 bis 200 phr, ganz besonders bevorzugt 1 bis150 phr, wenigstens einer Kieselsäure.

Handelt es sich bei dem Füllstoff um wenigstens einen Ruß, so enthält die Kautschukmischung bevorzugt 1 bis 200 phr, besonders bevorzugt 1 bis 170 phr und ganz besonders bevorzugt 1 bis 100 phr wenigstens eines Rußes.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 60 bis 260 m²/g, besonders bevorzugt von 120 bis 230 m²/g, und eine CTAB-Oberfläche (gemäß ASTM D 3765) von 30 bis 400 m²/g, bevorzugt von 60 bis 250 m²/g, besonders bevorzugt von 120 bis 230 m²/g, aufweist.

Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Die erfindungsgemäße Kautschukmischung kann auch ein Gemisch zweier oder mehrerer der genannten Füllstoffe enthalten.

Zinkoxid gehört im Rahmen der vorliegenden Erfindung nicht zu den Füllstoffen, ist aber bevorzugt in Kombination mit Stearinsäure in der erfindungsgemäßen Kautschukmischung enthalten.

Weiterhin enthält die Kautschukmischung bevorzugt noch weitere Zusatzstoffe.

Weitere Zusatzstoffe beinhaltet im Wesentlichen - neben Zinkoxid (ZnO) und Stearinsäure -ggf. Silan-Kupplungsagenzien für die Anbindung von Kieselsäure an die Polymerketten der enthaltenen Kautschuke, Weichmacher, das Vulkanisationssystem aus Schwefel und/oder Schwefelspendern mit Hilfe von Vulkanisationsbeschleunigern, Ozonschutzmittel, Alterungsschutzmittel, Klebharze, Mastikationshilfsmittel und weitere Aktivatoren bzw. Verarbeitungshilfsmittel, wie z.B. Fettsäuresalze, wie z.B. Zinkseifen und Fettsäureester und deren Derivate, wie z.B. Zinkstearat, oder Zinkkomplexe wie z.B. Zinkethylhexanoat.

Als Silan-Kupplungsagenzien können dabei alle dem Fachmann für die Verwendung in Kautschukmischungen bekannten Silan-Kupplungsagenzien verwendet werden. Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261^{®} der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden.

Ferner ist es denkbar, dass eines der oben genannten Mercaptosilane, insbesondere 3-Mercaptopropyltnethoxysilan, in Kombination mit Verarbeitungshilfsmitteln (die unten aufgeführt sind), insbesondere PEG-Carbonsäureester, eingesetzt werden.

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Der Mengenanteil der Gesamtmenge an weiteren Zusatzstoffen beträgt 3 bis 150 phr, bevorzugt 3 bis 100 phr und besonders bevorzugt 5 bis 80 phr.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze, die nicht zu den oben genannten Klebharzen zählen, oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden.

Ein weiterer Gegenstand der der vorliegenden Erfindung besteht in der Verwendung der beschriebenen schwefelvernetzbaren Kautschukmischung zur Herstellung eines Fahrzeugreifens. Damit ist ein weiterer Gegenstand der Erfindung auch ein Fahrzeugreifen, bei dessen Herstellung wenigstens eine erfindungsgemäße schwefelvernetzbare Kautschukmischung - enthaltend wenigstens ein erfindungsgemäßes Copolymer hergestellt mit wenigstens einem erfindungsgemäßen Verfahren wie oben beschrieben - verwendet wurde.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Gemäß einer bevorzugten Ausführungsform der Erfindung handelt es sich um einen Fahrzeugluftreifen.

Hierbei ist die Verwendung in allen Reifenbauteilen prinzipiell denkbar, wie insbesondere dem Laufstreifen und/oder der Seitenwand und/oder in wenigstens einem inneren Bauteil.

Als innere Reifenbauteile werden im Wesentlichen Squeegee, Innenseele (Innenschicht), Kernprofil, Gürtel, Schulter, Gürtelprofil, Karkasse, Wulstverstärker, Wulstprofil, Hornprofil und Bandage bezeichnet.

Kautschukmischungen der inneren Reifenbauteile sowie der Seitenwand werden auch als Body-Mischung bezeichnet.

Bevorzugt wird die erfindungsgemäße Kautschukmischung jedoch in Laufstreifen von Fahrzeugreifen verwendet, bevorzugt hierbei wenigstens in der Cap von Laufstreifen mit Cap/Base-Konstruktion.

Laufstreifen tragen in erheblichem Maße zum Abriebverhalten und dem Rollwiderstand des Fahrzeugreifens bei. Zudem müssen insbesondere Laufstreifen rissbeständig sein.

Zur Verwendung in Fahrzeugreifen wird die Mischung als Fertigmischung vor der Vulkanisation bevorzugt in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Der Reifenrohling wird anschließend unter im Stand der Technik bekannten Bedingungen vulkanisiert.

Ein weiterer Gegenstand der vorliegenden Erfindung besteht in der Verwendung der beschriebenen schwefelvernetzbaren Kautschukmischung zur Herstellung eines Gurtes, Riemens oder Schlauches.

Zur Verwendung der erfindungsgemäßen Kautschukmischung in Riemen, Gurten und Schläuchen, insbesondere in Fördergurten, wird die extrudierte noch unvulkanisierte Mischung in die entsprechende Form gebracht und ggf. dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

## Patentansprüche

1. Verfahren zur Herstellung eines Copolymers durch radikalische Copolymerisation eines Monomers gemäß Formel I) mit wenigstens einem Dien
I) A-S-P,
wobei A eine chemische Gruppe enthaltend wenigstens eine aliphatische Doppelbindung ist, und
wobei S ein Schwefelatom ist, und
wobei P eine Schutzgruppe ist, die ausgewählt ist aus der Gruppe bestehend aus
S(=O)₂-R¹ mit R¹ = Alkyl, Benzyl oder Phenyl und/oder
S-C(=S)-N-R²R³ mit R² und R³ = Alkyl, Benzyl oder Phenyl und/oder
C(=O)-R⁴ mit R⁴ = Alkyl und/oder
N-R⁵R⁶ mit R⁵ = Wasserstoffatom (H), Alkyl, Benzyl oder Phenyl und
R⁶ = Alkyl, Benzyl oder Phenyl und/oder
SiR⁷R⁸R⁹ mit R⁷, R⁸ und R⁹ = Alkyl oder Benzyl und/oder
S(=O)₂-OM mit M = Na, K oder H.

2. Verfahren nach Anspruch 1, **dadurch gekennzeichnet, dass** A eine 4-Vinylbenzyl-Gruppe ist.

3. Verfahren nach Anspruch 2 **dadurch gekennzeichnet, dass** es sich bei dem Monomer um 4-Vinylbenzylthioacetat handelt.

4. Verfahren nach einem der Ansprüche 1 bis 3, **dadurch gekennzeichnet, dass** das Dien ausgewählt ist aus der Gruppe bestehend aus 1,3-Butadien und/oder 2-Methylbuta-1,3-dien und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien und/oder 2-Chlor-1,3-butadien.

5. Copolymer **dadurch gekennzeichnet, dass** es nach dem Verfahren gemäß einem der Ansprüche 1 bis 4 hergestellt wurde.

6. Schwefelvernetzbare Kautschukmischung **dadurch gekennzeichnet, dass** sie wenigstens ein Copolymer nach Anspruch 5 enthält.

7. Verwendung einer schwefelvernetzbaren Kautschukmischung nach Anspruch 6 zur Herstellung eines Fahrzeugreifens.

8. Verwendung einer schwefelvernetzbaren Kautschukmischung nach Anspruch 6 zur Herstellung eines Gurtes, Riemens oder Schlauches.

9. Verfahren zur Herstellung von 4-Vinylbenzylthioacetat in polar-aprotischen Lösungsmitteln aus 4-Vinylbenzylchlorid und Thioessigsäure unter Zuhilfenahme einer Base, wobei das polar-aprotische Lösungsmittel ausgewählt ist aus Ketonen wie Aceton, Nitrilen wie Acetonitril, Nitroverbindungen wie Nitromethan, tertiären Carbonsäureamiden wie Dimethylformamid, Hexamethylphosphorsäuretriamid, Sulfoxide wie Dimethylsulfoxid, Sulfonen wie Tetrahydrothiophen-1,1-dioxid, Diethern des Ethylenglycols, Kohlensäureestern wie Dimethylcarbonat oder Ethylen-und Propylencarbonat, Harnstoffderivaten wie Tetramethylharnstoff oder Dimethylpropylenharnstoff, Lactamen wie N-Methyl-2-pyrrolidon und Lactonen wie Υ-Butyrolacton, und wobei die Base Kaliumcarbonat ist.

## Claims

1. Process for preparing a copolymer by free-radical copolymerization of a monomer of formula I) with at least one diene
I) A-S-P
where A is a chemical group containing at least one aliphatic double bond, and
where S is a sulfur atom, and
where P is a protecting group selected from the group consisting of
S(=O)₂-R¹ with R¹ = alkyl, benzyl or phenyl and/or
S-C (=S) -N-R²R³ with R² and R³ = alkyl, benzyl or phenyl and/or
C(=O)-R⁴ with R⁴ = alkyl and/or
N-R⁵R⁶ with R⁵ = hydrogen atom (H), alkyl, benzyl or phenyl and
R⁶ = alkyl, benzyl or phenyl and/or
SiR⁷R⁸R⁹ with R⁷, R⁸ and R⁹ = alkyl or benzyl and/or S(=O)₂-OM with M = Na, K or H.

2. Process according to Claim 1, **characterized in that** A is a 4-vinylbenzyl group.

3. Process according to Claim 2, **characterized in that** the monomer is 4-vinylbenzyl thioacetate.

4. Process according to any of Claims 1 to 3, **characterized in that** the diene is selected from the group consisting of 1,3-butadiene and/or 2-methylbuta-1,3-diene and/or 2,3-dimethyl-1,3-butadiene and/or 1,3-pentadiene and/or 2,4-hexadiene and/or 1,3-hexadiene and/or 1,3-heptadiene and/or 1,3-octadiene and/or 2-methyl-2,4-pentadiene and/or cyclopentadiene and/or 2,4-hexadiene and/or 1,3-cyclooctadiene and/or 2-chloro-1,3-butadiene.

5. Copolymer, **characterized in that** it has been prepared by the process according to any of Claims 1 to 4.

6. Sulfur-crosslinkable rubber mixture, **characterized in that** it comprises at least one copolymer according to Claim 5.

7. Use of a sulfur-crosslinkable rubber mixture according to Claim 6 for production of a motor vehicle tyre.

8. Use of a sulfur-crosslinkable rubber mixture according to Claim 6 for production of a cord, belt or hose.

9. Process for preparing 4-vinylbenzyl thioacetate in polar aprotic solvents composed of 4-vinylbenzyl chloride and thioacetic acid with the aid of a base, wherein the polar aprotic solvent is selected from ketones such as acetone, nitriles such as acetonitrile, nitro compounds such as nitromethane, tertiary carboxamides such as dimethylformamide, hexamethylphosphoramide, sulfoxides such as dimethyl sulfoxide, sulfones such as tetrahydrothiophene 1,1-dioxide, diethers of ethylene glycol, carbonic esters such as dimethyl carbonate or ethylene carbonate and propylene carbonate, urea derivatives such as tetramethylurea or dimethylpropyleneurea, lactams such as N-methyl-2-pyrrolidone, lactones such as Υ-butyrolactone, and wherein the base is potassium carbonate.

## Revendications

1. Procédé pour la préparation d'un copolymère par copolymérisation radicalaire d'un monomère selon la formule I) avec au moins un diène
I) A-S-P,
A étant un groupe chimique contenant au moins une double liaison aliphatique, et
S étant un atome de soufre, et
P étant un groupe protecteur, qui est choisi dans le groupe constitué par
S(=O)₂-R¹ avec R¹ = alkyle, benzyle ou phényle et/ou S-C(=S)-NR²R³ avec R² et R³ = alkyle, benzyle ou phényle et/ou
C(=O)-R⁴ avec R⁴ = alkyle et/ou
NR⁵R⁶ avec R⁵ = atome d'hydrogène (H), alkyle, benzyle ou phényle et R⁶ = alkyle, benzyle ou phényle et/ou
SiR⁷R⁸R⁹ avec R⁷, R⁸ et R⁹ = alkyle ou benzyle et/ou S(=O)₂-OM avec M = Na, K ou H.

2. Procédé selon la revendication 1, **caractérisé en ce que** A est un groupe 4-vinylbenzyle.

3. Procédé selon la revendication 2, **caractérisé en ce que** le monomère est le thioacétate de 4-vinylbenzyle.

4. Procédé selon l'une quelconque des revendications 1 à 3, **caractérisé en ce que** le diène est choisi dans le groupe constitué par le 1,3-butadiène et/ou le 2-méthylbuta-1,3-diène et/ou le 2,3-diméthyl-1,3-butadiène et/ou le 1,3-pentadiène et/ou le 2,4-hexadiène et/ou le 1,3-hexadiène et/ou le 1,3-heptadiène et/ou le 1,3-octadiène et/ou le 2-méthyl-2,4-pentadiène et/ou le cyclopentadiène et/ou le 2,4-hexadiène et/ou le 1,3-cyclooctadiène et/ou le 2-chloro-1,3-butadiène.

5. Copolymère **caractérisé en ce qu'**il a été préparé par un procédé selon l'une quelconque des revendications 1 à 4.

6. Mélange de caoutchouc réticulable au soufre, **caractérisé en ce qu'**il contient au moins un copolymère selon la revendication 5.

7. Utilisation d'un mélange de caoutchouc réticulable au soufre selon la revendication 6 pour la fabrication d'un pneu de véhicule.

8. Utilisation d'un mélange de caoutchouc réticulable au soufre selon la revendication 6 pour la fabrication d'une ceinture, d'une courroie ou d'un tuyau.

9. Procédé pour la préparation de thioacétate de 4-vinylbenzyle dans des solvants aprotiques polaires à partir de chlorure de 4-vinylbenzyle et d'acide thioacétique à l'aide d'une base, le solvant aprotique polaire étant choisi parmi des cétones comme l'acétone, des nitriles comme l'acétonitrile, des composés nitro comme le nitrométhane, des amides tertiaires d'acide carboxylique comme le diméthylformamide, le triamide hexaméthylphosphorique, des sulfoxydes comme le diméthylsulfoxyde, des sulfones comme le 1,1-dioxyde de tétrahydrothiophène, des diéthers de l'éthylène glycol, des esters d'acide carbonique comme le carbonate de diméthyle ou le carbonate d'éthylène et le carbonate de propylène, des dérivés d'urée comme la tétraméthylurée ou la diméthylpropylènurée, des lactames comme la N-méthyl-2-pyrrolidone et des lactones comme la γ-butyrolactone, et la base étant le carbonate de potassium.
